# EUROPÄISCHE PATENTSCHRIFT

(11) **EP 1 567 403 B1**
(45) Veröffentlichungstag und Bekanntmachung des Hinweises auf die Patenterteilung: **10.05.2006**
(21) Anmeldenummer: 03788773.4
(22) Anmeldetag: 06.11.2003
(51) Int. Cl.: B62D 12/00, F04B 1/00

(54) **HYDRAULISCHE LENKUNG FÜR FAHRZEUGE**
HYDRAULIC STEERING MECHANISM FOR VEHICLES
MECANISME DE DIRECTION HYDRAULIQUE POUR VEHICULES

(30) Priorität: 03.12.2002 DE 10256307
(43) Veröffentlichungstag der Anmeldung: 31.08.2005
(73) Patentinhaber: CNH Baumaschinen GmbH, 13581 Berlin (DE)
(72) Erfinder: IVANTYSYNOVA, Monika, 23843 Bad Oldesloe (DE); WEBER, Jürgen, 01139 Dresden (DE); GRABBEL, Jörg, 22149 Hamburg (DE)
(74) Vertreter: Meinke, Jochen
(86) Internationale Anmeldenummer: PCT/DE2003/003677
(87) Internationale Veröffentlichungsnummer: WO 2004/050456

(56) Entgegenhaltungen:
- EP-A- 0 266 785
- EP-A- 1 112 911
- DE-A- 2 161 456
- DE-A- 2 903 624
- DE-A- 3 730 045
- DE-A- 10 104 851

## Beschreibung

Die Erfindung betrifft eine hydraulische Lenkung für knickgelenkte Fahrzeuge, insbesondere Baumaschinen, wobei diese einen hydraulischen Schwenkmotor zur Bewirkung der Lenkbewegung aufweist, der mit einer in ihrer Förderrichtung verstellbaren Pumpe mit Umkehr der Förderrichtung verbunden ist.

Hydraulische Lenkungen sind in vielfältiger Ausgestaltung bekannt und weit verbreitet. Dabei werden üblicherweise Linearzylinder in Verbindung mit Lenkgestängen verwandt, um die einzuschlagenden Räder in den gewünschten Lenkwinkel zu bringen. Zur Steuerung der Linearzylinder sind Regelventilanordnungen und dgl. üblich, die einen genau definierten Druckmittelfluss zum Zylinder gewährleisten.

Ein besonderes Pumpsystem für eine hydraulische Lenkung wird in der DE 101 04 851 A1 offenbart. Diese besteht aus einer Flügelzellenpumpe, die eine regelbare Pumpenleistung aufweist und somit einen veränderbaren Druckmittelfluss zur Lenkung zur Verfügung stellen kann.

Die Pumpenleistung wird bei dieser Pumpe über einen verschiebbaren Kurvenring, der den Pumpenrotor umgibt, verändert, dessen Position durch einen Elektromotor bestimmt wird. Ein Regler misst die aktuelle Position des Kurvenringes und generiert daraus die nötigen Stellsignale für den Elektromotor.

Diese Flügelzellenpumpe kann aufgrund ihres Aufbaus allerdings nur mittlere Maximaldrücke erzeugen und eignet sich deshalb nicht für alle Arten von hydraulischen Lenkaktuatoren.

Die weiteren bekannten Hydrauliklenkungen weisen eine Reihe von Nachteilen auf. Die Verwendung von Linearzylindern ist insbesondere bei knickgelenkten Fahrzeugen ungünstig, da diese in den rauen Arbeitsumgebungen beschädigt werden können. Außerdem ist die dazu notwendige Mechanik konstruktiv aufwendig.

Die zur Lenkung notwendigen Ventilanordnungen sind ebenfalls sehr aufwendig. Die im allgemeinen in einem Servostaten zusammengefassten unterschiedlichen hydraulischen Elemente umfassen üblicherweise eine Rotoreinheit, die mechanisch mit dem Lenkventil verbunden ist, Überdruckventile zur Hochdruckabsicherung, Rückschlag- und einige weitere Ventile, um eine Druckmittelversorgung der Lenkeinheit bei allen Betriebszuständen zu gewährleisten. Die Lenkung muss immer funktionieren, also auch in Notsituationen und bei abgeschaltetem Hauptmotor, so dass üblicherweise zusätzlich eine Notdruckversorgung, z.B. mit einem Elektromotor oder ähnlichem, vorgesehen ist. Die Drosselkanten in den Ventilen bringen Druckverluste mit sich, was den Wirkungsgrad einer solchen Anordnung reduziert. Elektrohydraulische Steuerungen der Lenkung, bei denen auf mechanische Betätigungen der Rotoreinheit im Servostaten verzichtet werden kann, sind mit diesen Lösungen sehr aufwendig, da komplizierte elektrohydraulische Ventilanordnungen verwendet werden müssen.

Eine hydraulische Lenkung mit den Merkmalen des Oberbegriffes des Patentanspruches 1 ist aus DE 21 61 456 A bekannt. Bei dieser elektrohydraulischen Lenkeinrichtung sind entweder zwei Lenkzylinder in Verbindung mit einem Knickgelenk oder eine Achsschenkellenkung mit einem Lenkzylinder vorgesehen. Anstelle der Lenkzylinder können auch Ölmotoren in Verbindung mit einem mechanischen System eingesetzt werden.

Der Erfindung liegt die Aufgabe zugrunde, eine hydraulische Lenkung für Fahrzeuge zu schaffen, die sich durch eine einfache und robuste Mechanik auszeichnet und sich gut steuern läßt, ohne die Nachteile des Standes der Technik zu besitzen.

Mit einer hydraulischen Lenkung der eingangs bezeichneten Art wird dies dadurch erreicht, dass der Schwenkmotor ein Schwenkflügelmotor ist, der als Knickgelenk des knickgelenkten Fahrzeuges ausgebildet ist oder in der Drehachse des Knickgelenkes des Fahrzeuges angeordnet ist.

Eine solche hydraulische Lenkung zeichnet sich durch eine einfache und robuste Mechanik aus und läßt sich gut steuern. Bei Knickgelenken an Fahrzeugen werden der vordere und der hintere Teil des Fahrzeuges in einer Rotationsachse relativ zueinander verdreht, wodurch die Kurvenfahrt bewirkt wird. Ein in dieser Achse angeordneter Schwenkflügelmotor als Schwenkmotor kann dann direkt den Winkel zwischen dem vorderen und hinteren Fahrzeugteil bestimmen. Zusätzlich kann er dabei auch die Lagerfunktionen übernehmen, so dass eine einzige Einheit aus Gelenk und Schwenkflügelmotor entsteht. Außen angebracht und damit der Gefahr der Zerstörung ausgesetzte Lenkzylinder entfallen so vollständig. Durch den Einsatz eines Schwenkflügelmotors, insbesondere eines Schwenkflügelmotors mit wenigstens zwei beweglichen Flügeln, bietet sich der weitere Vorteil, eine gleichmäßige Kraftankopplung an die Rotationsachse zu ermöglichen sowie nur noch etwa das halbe Bauvolumen eines einflügeligen Motors für das gleiche Lenkvolumen zu benötigen. Schwenkflügelmotoren mit einem Flügel besitzen einen Rotationswinkelbereich von etwa 270°. Da für Lenksysteme aber in der Regel Winkel von weniger als 135° erforderlich sind, kann ein Schwenkflügelmotor mit zwei beweglichen Flügeln eingesetzt werden.

In bevorzugter Ausgestaltung ist vorgesehen, dass die in ihrer Fördermenge verstellbare Pumpe mit Umkehr der Förderrichtung als von einem drehzahlgeregelten Elektromotor angetriebene Konstantpumpe ausgebildet ist.

Alternativ kann vorgesehen sein, dass die in ihrer Fördermenge verstellbare Pumpe mit Umkehr der Förderrichtung als Pumpe mit verstellbarem Verdrängungsvolumen, insbesondere als Schrägscheiben/Axialkolbenpumpe ausgebildet ist.

Diese beiden Ausgestaltungen einer in der Fördermenge verstellbaren Pumpe bieten je nach Einsatzzweck eine besonders günstige Möglichkeit, den benötigten Volumenstrom für die Lenkung bereitzustellen. Die Verwendung der elektrisch angetriebenen Konstantpumpe ermöglicht eine von den anderen eventuell im Fahrzeug befindlichen Hydrauliksystemen unabhängige Lenkhydraulik. In Fahrzeugen, in denen ein übergeordnetes Power-Management-System in Verbindung mit weiteren hydraulischen Systemen verwandt wird, ist die Benutzung der verdrängergesteuerten Pumpe sinnvoll, die in diesem Fall beispielsweise von der zentralen Kraftmaschine des Fahrzeuges mit angetrieben wird.

Eine besondere Ausgestaltung der Vorrichtung sieht vor, dass wenigstens ein Schwenkflügelmotor ober- und/oder unterhalb des Knickgelenkes angeordnet ist.

Zur Erhöhung des möglichen Lenkmomentes bzw. der Verkleinerung der Baugröße einzelner Schwenkflügelmotoren ist es möglich, mehrere Motoren an der Drehachse anzubringen. Dabei werden zusätzlich zu einem eventuell innerhalb des Gelenkes angeordneten Motor ober- oder unterhalb des Gelenkes auf derselben Achse weitere Schwenkflügelmotoren angeordnet. Da sich die maximalen Lenkmomente durch die Gesamtvolumina aller zusammenwirkenden Motoren ergeben, läßt sich so ein optimales Verhältnis aus Baugröße und möglichem Lenkmoment erreichen.

In einer weiteren Ausgestaltung der Erfindung ist vorgesehen, dass zur Pumpenansteuerung eine elektronische Regeleinrichtung, insbesondere ein Microcontroller, vorgesehen ist. Durch einen elektronischen Regler lassen sich die vielfältigen Regelungsprobleme der technischen Aufgaben für die Lenkung zentral lösen. Die Verwendung eines Microcontrollers ermöglicht die Benutzung unterschiedlicher Programme sowie eine flexible und kostengünstige Implementierung der Regelung und ermöglicht eine Kopplung mit weiteren Fahrzeugkomponenten, was die Einbindung der Lenkung in ein globales Fahrzeugregelkonzept erleichtert.

Vorteilhaft ist es, wenn Sensoren zur Erfassung des Lenkwinkels und/oder weiterer Systemzustandsgrößen vorgesehen sind. Damit läßt sich die Steuerung der Lenkung zu einer Regelung erweitern. Durch die Erfassung des Lenkwinkels läßt sich dieser regeln und damit eine deutlich höhere Lenkgenauigkeit erzielen als bei einem reinen Steuerungskonzept. Mit der Erfassung weiterer Systemzustandsgrößen, wie beispielsweise der Pumpendrehzahl, des Hydraulikdruckes oder der Fahrzeuggeschwindigkeit läßt sich eine weitere Erhöhung der Lenkpräzision erreichen und eine Abhängigkeit des Lenkverhaltens, beispielsweise von der Fahrgeschwindigkeit, erzielen.

Eine weitere Ausgestaltung der Lenkung ist dadurch gekennzeichnet, dass zur Lenkwinkelvorgabe ein elektronisches Bedienelement, insbesondere ein Joystick, ggf. mit Force-Feedback-Funktion vorgesehen ist. Durch den Verzicht auf mechanische Lenkkomponenten ist ein Übergang zu einer komplett elektrohydraulischen Fahrzeugsteuerung möglich. Dabei wird das eigentlich mechanische Lenkrad mit direkter mechanischer Kopplung an die Lenkung durch einen elektronischen SollwertGeber ersetzt. Durch diesen wird dann nur noch beispielsweise in Form eines Joystick-Ausschlages die gewünschte Lenkbewegung vorgegeben und elektronisch an die Lenkungsregelung übermittelt, die diese dann durch Beeinflussung des Pumpenverdrängervolumens in die mechanische Bewegung des Lenkmotors umsetzt. So lassen sich eine Reihe von zusätzlichen Sicherheitsfunktionen realisieren, die beispielsweise zu starke Lenkeinschläge bei Schnellfahrt vermeiden und trotzdem ein schnelles Lenkverhalten bei langsamer Fahrt erlauben. Die zur Bedienung des Fahrzeuges notwendige physische Kraft des Fahrers wird ebenfalls deutlich reduziert. Durch die Benutzung von Force-Feedback läßt sich eine direkte haptische Signalisierung des aktuellen Fahrzeugzustandes dem Bediener gegenüber erreichen. Neben unsicheren Fahrzeugzuständen, die so dem Fahrer angezeigt werden können, läßt sich auch das durch die verschiedenen Regelprogramme geänderte Fahrzeugverhalten direkt dem Fahrer gegenüber darstellen.

Weitere Merkmale, Einzelheiten und Vorteile der Erfindung ergeben sich aufgrund der nachfolgenden Beschreibung sowie anhand der Zeichnungen. Diese zeigen in:
- Fig. 1:: eine schematische Ansicht einer Lenkung nach der Erfindung,
- Fig. 2:: eine schematische Draufsicht auf ein knickgelenktes Fahrzeug,
- Fig. 3:: eine schematische Seitenansicht eines knickgelenkten Fahrzeuges,
- Fig. 4:: eine Seitenansicht eines Knickgelenkes (teilweise geschnitten),
- Fig. 5:: eine Seitenansicht eines Knickgelenkes mit zwei Schwenkflügelmotoren,
- Fig. 6:: eine Seitenansicht eines Knickgelenkes mit drei Schwenkflügelmotoren,
- Fig. 7:: einen schematischen Schaltplan der Lenkung im geschlossenen Regelkreis,
- Fig. 8:: den schematischen Schaltplan der gesteuerten Lenkung sowie in
- Fig. 9:: den Schaltplan der erfindungsgemäßen Lenkung mit Differentialzylinderlenkung.

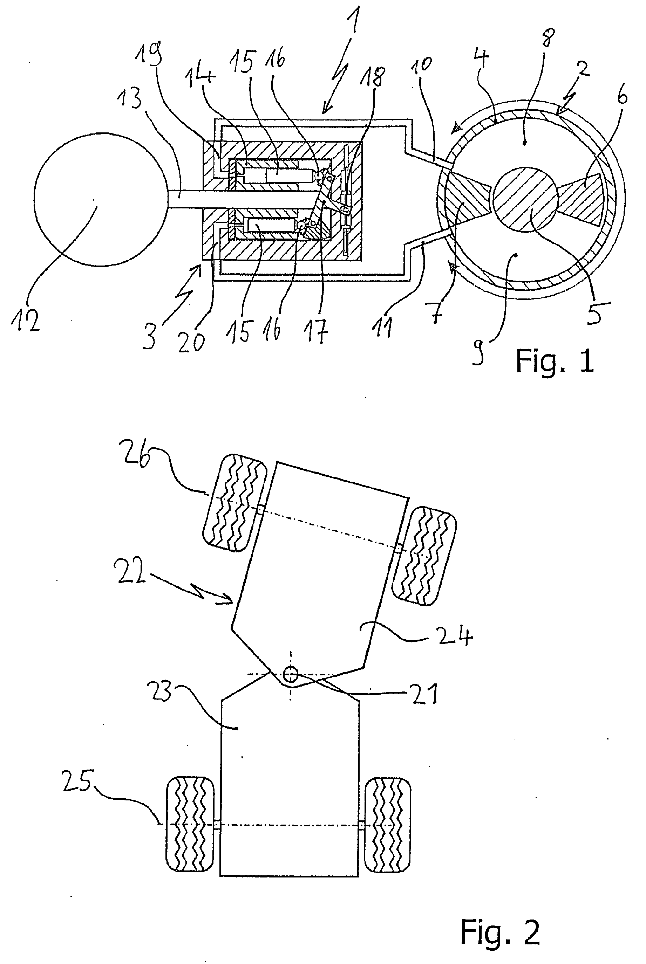

Die in Fig. 1 gezeigte, allgemein mit 1 bezeichnete erfindungsgemäße Lenkung, besteht im wesentlichen aus einem hydraulischen Schwenkmotor 2 und einer im Fördervolumen verstellbaren Pumpe 3 mit Umkehr der Förderrichtung.

Beim dargestellten Schwenkmotor 2 besitzt dieser ein zylinderförmiges äußeres Gehäuse 4 und eine zentrale drehbare Achse 5. An der Achse 5 ist ein Schwenkflügel 6 befestigt, der außen gegen die Gehäusewand 4 abgedichtet ist. Ein fest an der Außenwand 4 befestigter Flügel 7 liegt abgedichtet an der Rotationsachse 5 an. Durch den festen Flügel 7, die Achse 5 und den daran befestigten Rotationsflügel 6 wird das Innere des Gehäuses 4 in zwei Kammern 8, und 9 unterteilt. Jede der Kammern 8 und 9 ist über einen Hydraulikkanal 10 bzw. 11 mit dem Hydraulikkreis verbunden.

Wird durch den Kanal 10 Druckmittel in die Kammer 8 gepumpt und die gleiche Menge Druckmittel durch den Kanal 11 aus der Kammer 9 abgezogen, wird aufgrund der jeweils gleich großen und entgegengesetzten Volumenänderung in den beiden Kammern 8 und 9 durch den Flügel 6 die Achse 5 in Rotation versetzt, so dass eine vom Druckmittelfluss abhängige Drehbewegung der Achse entsteht. Diese kann maximal soweit gehen, bis das Volumen einer der beiden Kammern auf Null reduziert wurde und der bewegliche Flügel 6 ganz an der einen bzw. der anderen Seite des festen Flügels 7 anliegt.

Die Hydraulikpumpe 3 ist in Axialkolbenbauweise ausgeführt. Durch eine Kraftmaschine 1,2 wird die zentrale Welle 13 der Pumpe in Rotation versetzt. Diese treibt einen Zylinderblock 14 an, in dem auf einem Teilkreis um die Achse eine Anzahl von Kolben 15 axial verschiebbar angeordnet sind. Diese Kolben 15 stützen sich mit ihrem freien Ende 16 auf einer Scheibe 17 ab, wodurch bei Rotation des Zylinderblockes 14 bei schräger Anordnung der Scheibe 17 eine Hubbewegung der Kolben 15 erzeugt wird. Bei Herausbewegung der Kolben 15 vom inneren zum äußeren Totpunkt wird Druckflüssigkeit vom Anschluss 19 angesaugt und bei Bewegung vom äußeren zum inneren Totpunkt Druckflüssigkeit zum Anschluss 20 gefördert.

Wird die Scheibe 17 nun durch eine Steueraktorik 18 in ihrer Neigung verstellt, führt das zu einer Änderung der Hubbewegung der Kolben 15, was zu einer Änderung des Verdrängungsvolumens der Pumpe führt.

Wenn sich die Schrägscheibe 17 in beide Richtungen über die Neutralposition, in der sie senkrecht zur Rotationsachse 13 steht, hinausbewegen läßt, ist die Förderrichtung der Pumpe umkehrbar und es läßt sich Fluid am Anschluss 20 ansaugen und zum Anschluss 19 fördern. Die Fördermenge ist immer vom Winkel der Scheibe 17 abhängig und läßt sich von der Neutralposition, bei der kein Druckmittel gefördert wird, bis zu einem Maximum in jeder der beiden Förderrichtungen stufenlos variieren, bei dem die Scheibe 17 ihren maximalen Anstellwinkel zur Achse 13 besitzt.

Der Schwenkinotor 2 ist am Knickgelenk 21 eines knickgelenkten Fahrzeuges 22 eingebaut, wie in Fig. 2 dargestellt. Dabei ist das Gehäuse 4 des Schwenkmotors 2 fest mit dem einen Fahrzeugteil 23 verbunden und die Rotationsachse 5 fest mit dem anderen Fahrzeugteil 24. Die durch die Druckmittelzu- bzw. - abfuhr vom Anschluss 10 bzw. Anschluss 11 des Schwenkmotors 2 hervorgerufene Drehbewegung der Achse 5 bewirkt ein Abknicken der einen Fahrzeughälfte 24 relativ zur anderen Fahrzeughälfte 23. Der dadurch resultierende Winkel zwischen den beiden Achsen 25 und 26 des Fahrzeuges führt zu einer Kurvenfahrt, deren Radius umso kleiner wird, je weiter die Achse 5 im Motor 2 verschwenkt wird.

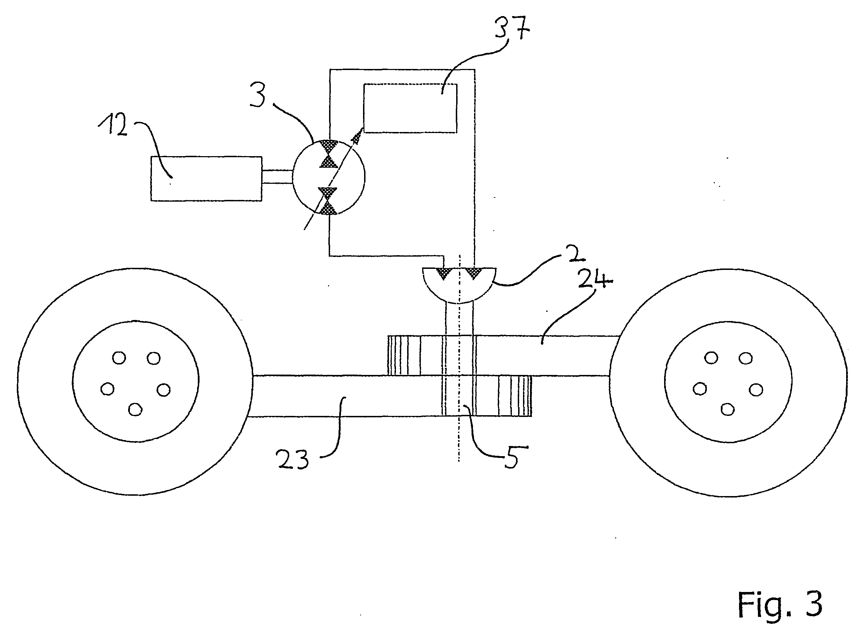

In Fig. 3 ist noch einmal schematisch die Bewirkung der Lenkbewegung verdeutlicht. Die von der Kraftmaschine 12 angetriebene, in ihrem Fördervolumen verstellbare Pumpe 3, fördert einen von der durch die übergeordnete Regelung der elektrohydraulischen Verstelleinheit 37 bestimmten Volumenstrom zum Schwenkmotor 2, der in einer Drehbewegung der Achse 5 resultiert. Dies führt zum Einstellen einer Lenkbewegung zwischen den beiden Fahrzeugteilen 23 und 24.

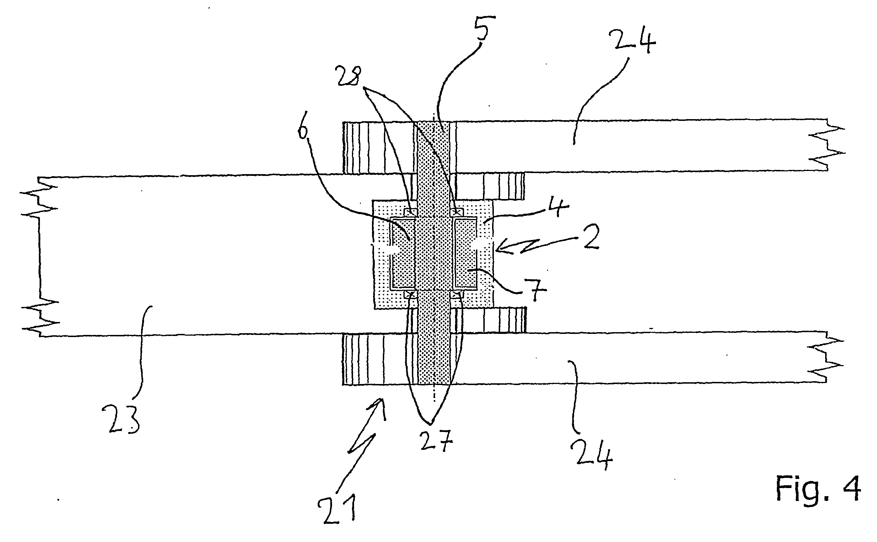

Der Schwenkmotor 2 kann auch im Gelenk 21 selbst eingebaut sein, wie in Fig. 4 näher dargestellt. Die fest mit dem einen Fahrzeugteil 24 verbundene Drehachse 5 geht durch den im Gelenk befindlichen Schwenkmotor 2 hindurch. Dieser ist mit seinem Gehäuse 4 fest mit dem anderen Fahrzeugteil 23 verbunden. Dabei kann durch die Lagerpunkte 27 und 28 der Schwenkmotor 2 selber das Drehlager zwischen den beiden Fahrzeugteilen 23 und 24 darstellen, was zu einem sehr kompakten Gelenkaufbau führt.

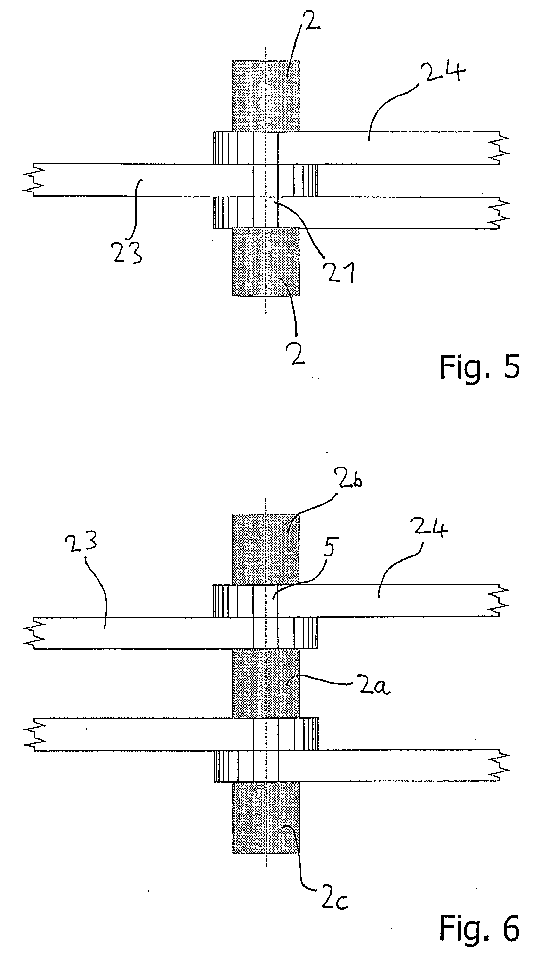

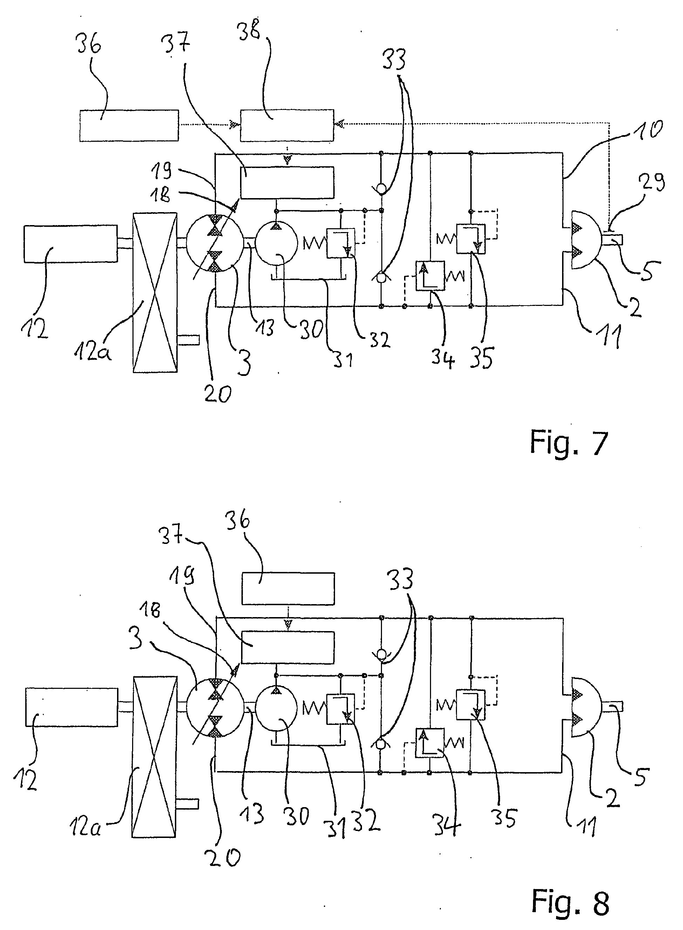

Alternativ können die Schwenkmotoren 2 auch ober- bzw. unterhalb des Gelenkes 21 zwischen den Fahrzeugteilen 23 und 24 angeordnet sein, wie in Fig. 5 gezeigt. Durch die Verwendung von zwei Motoren läßt sich das maximale Lenkmoment erhöhen und/ oder die Baugröße der beiden Motoren 2 reduzieren. Eine Ausgestaltung, bei der drei Schwenkinotoren 2a, 2b, 2c zur weiteren Erhöhung des maximalen Lenkmomentes zwischen den beiden Fahrzeugteilen 23 und 24 dienen, ist in Fig. 6 gezeigt. Dabei sind neben dem im Gelenk angeordneten Motor 2a zwei weitere Motoren 2b und 2c ober- bzw. unterhalb des Gelenkes angebracht. Diese treiben gemeinsam die Rotationsachse 5 an und sind fest mit den Fahrzeugteilen 23 bzw. 24 verbunden. Dabei muss durch die richtige Zuordnung der Anschlüsse 10 und 11 zum Hydraulikkreis darauf geachtet werden, dass die Kraftübertragung der Motoren in gleicher Richtung erfolgt. Eine Ausführung des verdrängergesteuerten hydraulischen Lenksystems ist in Fig. 7 dargestellt. Eine Kraftmaschine 12 treibt über ein Getriebe 12a die im Fördervolumen und Förderrichtung verstellbare Hydraulikpumpe 3 an. Auf derselben Antriebsachse 13 sitzt ebenfalls eine weitere nicht verstellbare kleinere Hydraulikpumpe 30, die von einem Hydraulikreservoir 31 Flüssigkeit ansaugt und den über ein Überdruckventil 32 abgesicherten Niederdruckkreis versorgt. Dieser ist über zwei Rüclcschlagventile 33 mit dem Hochdruckkreis verbunden, der zum Schutz der Verbraucher zwei Überdruclcventile 34 und 35 aufweist. Die beiden Anschlüsse 19 und 20 der verstellbaren Pumpe 3 sind direkt mit den beiden Anschlüssen 10 und 11 des Schwenkflügelmotors 2 verbunden. Jede Veränderung an der Verstellaktorik 18 der Pumpe 3 bewirkt damit einen Hydraulikfluss von dem Anschluss 19 der Pumpe 3 über den Anschluss 10 des Motors 2 in dessen eine Kammer und einen gleichgroßen Abfluss von Hydraulikfluid aus der anderen Kammer des Motors 2 über den Anschluss 11 zum zweiten Anschluss 20 der Pumpe 3. Damit läßt sich unmittelbar über die Änderung der Verstellaktorik 18 der Pumpe eine Lenkbewegung an der Achse 5 hervorrufen.

Im in Fig. 8 dargestellten gesteuerten Betrieb der Lenkung wird vom Bediener 36 ein Stellsignal vorgegeben, das von der elektrohydraulischen Verstelleinheit 37 der Pumpe so umgesetzt wird, dass ein entsprechendes Verdrängungsvolumen und die geforderte Förderstromrichtung der Pumpe 3 eingestellt wird und dadurch die für die Lenkbewegung geforderte Menge Volumenstrom zum entsprechenden Anschluss des Schwenkmotors bewirkt. Dieses entspricht in dieser einfachen Form einer Lenkwinkelgeschwindigkeitssteuerung, da durch die Einstellung der Fördermenge der Pumpe 3 die Geschwindigkeit der Lenkbewegung bestimmt wird. Damit kann der Bediener durch ein großes Stellsignal eine schnelle Lenkbewegung auf der Achse 5 hervorrufen und durch ein kleines Stellsignal eine kleine Lenkbewegung. Das Lenksignal gibt gleichzeitig die Richtung der Lenkbewegung vor. Wird die tatsächliche Stellung der Achse 5 durch einen Positionssensor 29 gemessen, kann dieses Signal von einer Regelung 38 benutzt werden, um einen geschlossenen Regelkreis zu erzeugen, wie in Fig. 7 dargestellt. Dabei wird das Stellsignal des Bedieners 36 in Verbindung mit der vom Sensor 29 gemessenen aktuellen Achsenposition verglichen und von der Regeleinrichtung 38 ein entsprechendes Stellsignal für die verstellbare Pumpe 3 erzeugt. So läßt sich einerseits eine Lenkwinkelregelung erreichen, bei der der Bediener durch seine Steuerbewegung die tatsächliche Position der Lenkung bestimmt, und andererseits eine Lenkgeschwindigkeitsregelung, bei der das Messsignal des Sensors 29 differenziert wird, womit die Rotationsgeschwindigkeit der Achse 5 geregelt werden kann.

Die Regelung 38 kann dabei verschiedene Lenkcharakteristiken erzeugen, bei der abhängig von weiteren gemessenen Betriebszuständen des Fahrzeuges und der Steuervorgabe des Bedieners 36 die Stellsignale zur elektrohydraulischen Verstelleinheit 37 erzeugt werden. Damit kann die Lenkcharakteristik dem Fahrzeugzustand angepasst werden.

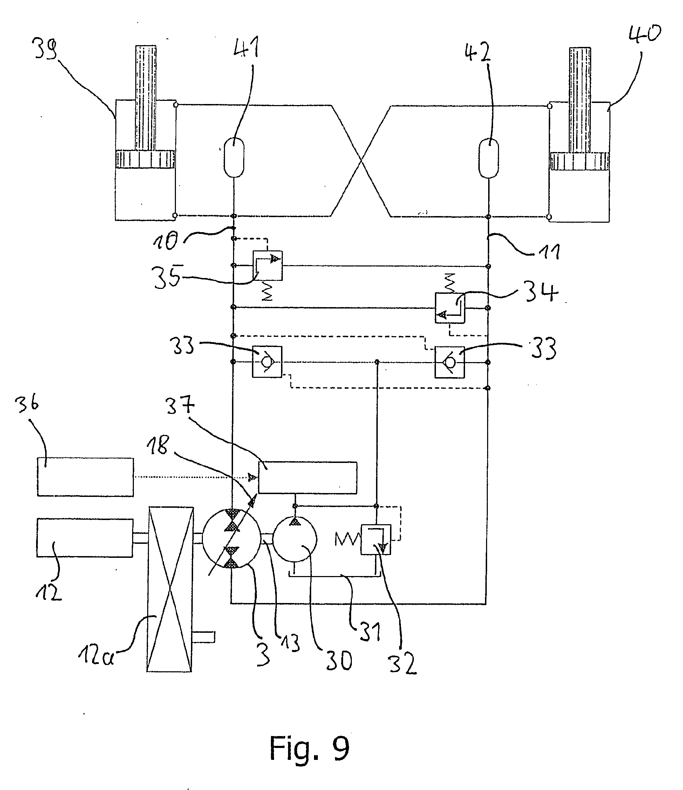

Der Betrieb der Steuerung nach der Erfindung mit einer herkömmlichen Differentialzylinderaktorik ist in Fig. 9 näher dargestellt. Dabei ist der Aufbau des Hydraulikkreises im wesentlichen analog zu oben. Allerdings ist statt des Schwenkmotors 2 eine herkömmliche, aus zwei Differentialzylindern 39 und 40 bestehende Lenkaktorik, angeschlossen. Dabei sind die Zylinder 39 und 40 im wesentlichen zwischen den beiden Fahrzeughälften 23 und 24 beidseitig vom Knickgelenk 21 angeordnet, so dass durch Einzug des einen Zylinders 39 auf der einen Seite und Ausfahren des anderen Zylinders 40 auf der anderen Seite ein entsprechendes Moment auf die beiden Fahrzeughälften aufgebracht wird, was zu einer Rotation um das Gelenk 21 führt.

Bedingt durch die unterschiedlichen Volumina der beiden Hälften der Differentialzylinder 29 und 40 und dadurch, dass die Ein- und Auszugsbewegung der beiden Zylinder nicht gleich sind, treten allerdings Differenzvolumina im Aktorikkreis auf. Diese werden einerseits durch die entsperrbaren Rückschlagventile 33 in den Niederdruckkreis ausgeglichen und können andererseits in zwei Hydraulikvorratsbehälter 41 und 42 fließen, die zu diesem Zweck an derartigen Differentialzylinderlenksystemen vorgesehen sein müssen. Hier ist ebenfalls eine Steuerung im offenen Regelkreis dargestellt, bei der der Bediener 36 ein entsprechendes Steuersignal vorgibt, von dem durch eine elektrohydraulische Verstelleinheit 37 das Verdrängungsvolumen der Pumpe 3 verändert wird, um einen entsprechenden Zu- bzw. Abfluss zu den Differentialzylindern zu erzeugen. Mit einer entsprechenden Messung des Winkels im Knickgelenk zwischen den beiden Fahrzeughälften läßt sich auch hier ein Betrieb im geschlossenen Regelkreis realisieren.

Natürlich ist die Erfindung nicht auf das vorstehende Ausführungsbeispiel beschränkt, sondern in vielfältiger Weise abänderbar, ohne den Grundgedanken zu verlassen. Beispielsweise lassen sich hydraulische Schwenkmotoren auch für Nichtknickgelenkfahrzeuge verwenden. Außerdem ist weder Anzahl noch Größe der Motoren auf die gezeigten Ausführungen beschränkt. Weiterhin kann als im Fördervolumen und Förderrichtung verstellbare Pumpe auch eine von einem drehzahlregelbaren Elektromotor angetriebene Konstantpumpe verwendet werden. Außerdem läßt sich der Regelalgorithmus vielfältig abändern, um ein gewünschtes Lenkverhalten für jedes Fahrzeug zu erreichen. Eine Integration in Gesamtfahrzeug- Regelkonzepte und ähnliches ist selbstverständlich auch möglich.

### Liste der Bezugszeichen

- 1: Lenkung
- 2a: Schwenkmotor
- 2b: Schwenkmotor
- 2c: Schwenkmotor
- 3: verstellbare Pumpe
- 4: Gehäuse
- 5: Rotationsachse
- 6: befestigte Rotationsflügel
- 7: feste Flügel
- 8: Kammer
- 9: Kammer
- 10: Hydraulikkanal
- 11: Kanal
- 12: Kraftmaschine
- 13: zentrale Welle
- 14: Zylinderblock
- 15: Kolben
- 16: freies Ende
- 17: Scheibe
- 18: Steueralctorik
- 19: Anschluss
- 20: Anschluss
- 21: Knickgelenk
- 22: knickgelenktes Fahrzeug
- 23: Fahrzeugteil
- 24: Fahrzeugteil
- 25: Achse
- 26: Achse
- 27: Lagerpunkt
- 28: Lagerpunkt
- 29: Sensor
- 30: Hydraulikpumpe
- 31: Hydraulikreservoir
- 32: überdruckventil
- 33: zwei Rückschlagventile
- 34: Überdruckventil
- 35: Überdruckventil
- 36: Stellsignal des Bedieners
- 37: elektrohydraulische Verstelleinheit
- 38: Regeleinrichtung
- 39: Zylinder
- 40: Zylinder
- 41: Hydraulikvorratsbehälter
- 42: Hydraulikvorratsbehälter

## Patentansprüche

1. Hydraulische Lenkung für knickgelenkte Fahrzeuge, insbesondere Baumaschinen, wobei diese einen hydraulischen Schwenkmotor (2) zur Bewirkung der Lenkbewegung aufweist, der mit einer in ihrer Fördermenge verstellbaren Pumpe (3) mit Umkehr der Förderrichtung verbunden ist,
**dadurch gekennzeichnet,**
**dass** der Schwenkmotor ein Schwenkflügelmotor (2) ist, der als Knickgelenk (21) des knickgelenkten Fahrzeuges (22) ausgebildet ist oder in der Drehachse des Knickgelenkes (21) des Fahrzeuges (22) angeordnet ist.

2. Lenkung nach Anspruch 1,
**dadurch gekennzeichnet,**
**dass** die in ihrer Fördermenge verstellbare Pumpe (3) mit Umkehr der Förderrichtung als von einem drehzahlgeregelten Elektromotor angetriebene Konstantpumpe ausgebildet ist.

3. Lenkung nach Anspruch 1,
**dadurch gekennzeichnet,**
**dass** die in ihrer Fördermenge verstellbare Pumpe (3) mit Umkehr der Förderrichtung als Pumpe mit verstellbarem Verdrängungsvolumen, insbesondere als Schrägscheiben/Axialkolbenpumpe ausgebildet ist.

4. Lenkung nach Anspruch 1, 2 oder 3,
**dadurch gekennzeichnet,**
**dass** wenigstens ein Schwenkflügelmotor (2) ober- und/oder unterhalb des Knickgelenkes (21) angeordnet ist.

5. Lenkung nach Anspruch 1 oder einem der vorangehenden Ansprüche,
**dadurch gekennzeichnet,**
**dass** zur Pumpenansteuerung eine elektronische Regeleinrichtung (38), insbesondere ein Microcontroller, vorgesehen ist.

6. Lenkung nach einem der vorangehenden Ansprüche,
**dadurch gekennzeichnet,**
**dass** Sensoren (29) zur Erfassung des Lenkwinkels und/oder weiterer System-Zustandsgrößen vorgesehen sind.

7. Lenkung nach einem der vorangehenden Ansprüche,
**dadurch gekennzeichnet,**
**dass** zur Lenkwinkelvorgabe ein elektronisches Bedienelement, insbesondere ein Joystick, ggf. mit Force-Feedback-Funktion, vorgesehen ist.

## Claims

1. A hydraulic steering arrangement for centre pivot-steered vehicles, in particular construction machines, wherein it has a hydraulic pivot motor (2) for producing the steering movement, which is connected to a pump (3) which is adjustable in its delivery amount, with reversal of the delivery direction,
**characterised in that**
the pivot motor is a pivot vane motor (2) which is in the form of a centre point steering joint (21) of the centre point-steered vehicle (22) or is arranged in the rotary axis of the centre point steering joint (21) of the vehicle (22).

2. A steering arrangement according to claim 1 **characterised in that** the pump (3) which is adjustable in its delivery amount with reversal of the delivery direction is in the form of a constant pump driven by a rotary speed-regulated electric motor.

3. A steering arrangement according to claim 1 **characterised in that** the pump (3) which is adjustable in its delivery amount with reversal of the delivery direction is in the form of a pump with an adjustable displacement volume, in particular in the form of a swash plate/axial piston pump.

4. A steering arrangement according to claim 1, claim 2 or claim 3 **characterised in that** at least one pivot vane motor (2) is arranged above and/or below the centre point steering joint (21).

5. A steering arrangement according to claim 1 or one of the preceding claims **characterised in that** an electronic regulating device (38), in particular a microcontroller, is provided for pump actuation.

6. A steering arrangement according to one of the preceding claims **characterised in that** there are provided sensors (29) for detecting the steering angle and/or further system state parameters.

7. A steering arrangement according to one of the preceding claims **characterised in that** there is provided an electronic operating element, in particular a joystick, optionally with force feedback function, for steering angle presetting.

## Revendications

1. Mécanisme de direction hydraulique pour véhicule à direction pivotante au centre, en particulier machines de construction, dans lesquelles celles-ci présentent un moteur de basculement hydraulique (2) pour l'actionnement du mouvement articulé, qui est raccordé à une pompe (3) réglable dans son débit de refoulement avec inversion de la direction de débit,
**caractérisé en ce que**
le moteur basculant est un moteur à aile variable (2) qui est configuré en tant qu'articulation pivotante au centre (21) du véhiculé à direction pivotante au centre (22) ou est agencé dans l'axe de rotation de l'articulation pivotante (21) du véhicule (22).

2. Mécanisme de direction selon la revendication 1,
**caractérisé en ce que** la pompe (3) réglable dans son débit de refoulement est conçue avec une inversion de la direction de débit en tant que pompe constante entraînée par un moteur électrique à régulation de nombre de tours.

3. Mécanisme de direction selon la revendication 1,
**caractérisé en ce que** la pompe (3) réglable dans son débit de refoulement est conçue avec inversion de la direction de débit en tant que pompe avec un volume de refoulement variable, en particulier en tant que pompe à piston axial/disque en nutation.

4. Mécanisme de direction selon la revendication 1, 2 ou 3,
**caractérisé en ce qu'**au moins un moteur à aile variable (2) est agencé au-dessus et/ou au-dessous de l'articulation pivotante (21).

5. Mécanisme de direction selon la revendication 1 ou l'une des revendications précédentes,
**caractérisé en ce que**, pour la commande de pompe, il est prévu un dispositif de régulation électronique (38), en particulier un microcontrôleur.

6. Mécanisme de direction selon l'une des revendications précédentes,
**caractérisé en ce qu'**il est prévu des capteurs (29) pour saisir l'angle de direction et/ou d'autres grandeurs d'état de systèmes.

7. Mécanisme de direction selon l'une des revendications précédentes,
**caractérisé en ce que**, pour la prédéfinition de l'angle de direction, il est prévu un élément d'actionnement électronique, en particulier une manette de commande, éventuellement avec une fonction Force-Feedback.
